# EUROPÄISCHE PATENTSCHRIFT

(11) **EP 1 617 954 B1**
(45) Veröffentlichungstag und Bekanntmachung des Hinweises auf die Patenterteilung: **02.12.2009**
(21) Anmeldenummer: 04728525.9
(22) Anmeldetag: 21.04.2004
(51) Int. Cl.: B05C 17/02, B29C 63/08, A46B 13/00, B01D 29/00, B60S 3/06

(54) **ÜBERZUG AUS WEBPLÜSCH**
COVER MADE OF WOVEN PILE
STRUCTURE DE RECOUVREMENT CONSTITUEE DE PELUCHE TISSEE

(30) Priorität: 24.04.2003 DE 10318680
(43) Veröffentlichungstag der Anmeldung: 25.01.2006
(73) Patentinhaber: KOHLRUSS, Gregor, 46414 Rhede (DE); WIESNER, Hubert, D-46354 Südlohn (DE); GRIEBE, Oliver, 46414 Rhede (DE)
(72) Erfinder: KOHLRUSS, Gregor, 46414 Rhede (DE); WIESNER, Hubert, D-46354 Südlohn (DE); GRIEBE, Oliver, 46414 Rhede (DE)
(74) Vertreter: Behrendt, Arne
(86) Internationale Anmeldenummer: PCT/EP2004/004185
(87) Internationale Veröffentlichungsnummer: WO 2004/094074

(56) Entgegenhaltungen:
- EP-A- 1 232 849
- US-A- 3 610 693
- US-A1- 2001 045 014
- US-A1- 2002 091 051
- US-B1- 6 231 711
- US-B1- 6 685 121

## Beschreibung

Die Erfindung betrifft einen auswechselbaren, zylindermantelförmigen Überzug aus Webplüsch mit radial nach außen vorstehenden Florfäden, für rotierende Waschbürsten oder Filterkerzen, bestehend aus einem endlosen, helikal gewickelten Plüschband, dessen Kanten durch eine endlos helikal verlaufende Naht ohne Ausbildung einer die zylindrische Außenkontur des Überzuges störende Stufe miteinander verbunden sind.

Nachdem Stande der Technik ist es bekannt, zum Beispiel die Walzen von Malerrollen mit einem Überzug aus Plüschmaterial zu versehen, der zumeist fest mit dem Rollenkörper der Malerrolle verbunden wird, so dass der Rollenkörper dem Überzug die erforderliche Festigkeit verleiht. Solche Mallerrollen und deren Herstellung sind beispielsweise aus der US 2001/0045014 A1 bekannt.

Bei einem dort offenbarten Überzug für eine Malerrolle werden die stumpf aneinander stoßenden Kanten des Grundgewebes des Plüschbandes unmittelbar miteinander verschweißt oder verklebt. Die Festigkeit einer solchen extrem schmalen Schweiß- oder Klebenaht mag für den Überzug einer Malerrolle ausreichend sein. Für Überzüge von mechanisch angetriebenen Waschbürsten in Autowaschanlagen oder für auswechselbare Überzüge von Filterkerzen, die mechanisch unter Rotation abgereinigt werden, reicht die Festigkeit einer so ausgebildeten Schweiß- oder Klebenaht bei weitem nicht aus. Auswechselbare zylindermantelförmige Überzüge für diese Zwecke müssen sowohl in axialer als auch in Umfangsrichtung stark belastbar sein und sollten darüber hinaus zumindest in der Außenkontur möglichst wenig gestört sein, weil sonst der Waschvorgang der rotierenden Waschbürsten beziehungsweise der ebenfalls rotierende Reinigungsvorgang der Filter gestört würde. Störend wären insbesondere axial verlaufenden Nähte, die den glatten Rundlauf der Rotation behindern. Webverfahren zur Herstellung von Webplüsch in Schlauchform sind nach dem Stand der Technik nicht bekannt und wären sicherlich zu aufwendig, insbesondere wenn diese zylindermantelförmigen Überzüge mit unterschiedlichen Durchmessern hergestellt werden müssten.

Es ist deshalb Aufgabe der Erfindung, auswechselbare Überzüge der Eingangs genannten Art zur Verfügung zu stellen, die sowohl in axialer als auch in radialer Richtung einen stärkeren Zusammenhalt haben und bei denen dennoch die äußere Zylinderkontur möglichst wenig gestört ist.

Gegenstand der Erfindung ist ein auswechselbarer, zylindermantelförmiger Überzug aus Webplüsch mit radial nach außen vorstehenden Florfäden für rotierende Waschbürsten oder Filterkerzen, bestehend aus einem endlosen, helikal gewickelten Plüschband, dessen Kanten durch eine endlose, helikal verlaufende Naht ohne Ausbildung einer die zylindrische Außenkontur des Überzuges störende Stufe miteinander verbunden sind, wobei die Kanten des Plüschbandes im Bereich der helikal verlaufenden Naht stumpf aneinander stoßen und der Überzug dadurch gekennzeichnet ist, dass die Kanten des Plüschbandes durch ein von innen am Grundgewebe befestigtes flaches und dünnes Textilband zusammengehalten werden. Bei dieser Ausgestaltung des Überzuges, ergibt sich eine Naht, die sowohl in radialer als auch in axialer Richtung hoch belastbar ist. Dennoch bleibt bei dieser Ausgestaltung des Überzuges jedenfalls die Außenkontur absolut zylindrisch. Geringfügige Störungen im Nahtbereich treten allenfalls an der Innenkontur durch das innen am Grundgewebe befestigte Textilband auf. Dieses Textilband ist jedoch so dünn ausgebildet, dass diese Störungen im Bereich der Außenkontur des Überzuges nicht mehr wahrnehmbar sind.

Alternativ ist Gegenstand der Erfindung ein auswechselbarer zylindermantelförmiger Überzug aus Plüsch mit radial nach außen vorstehenden Florfäden, insbesondere für rotierende Waschbürsten oder Filterkerzen, bestehend aus einem endlosen, helikal gewickelten Plüschband, dessen Kanten durch eine endlose, helikal verlaufende Naht verbunden sind, wobei sich dieser Überzug **dadurch kennzeichnet, dass** die Kanten des Plüschbandes sich im Bereich der helikalen Naht überlappen, wobei nur im Überlappungsbereich die Florfäden an den Kanten des Plüschbandes soweit eingekürzt sind, dass sich eine stetig verlaufende Außenkontur des Überzuges ergibt.

Diese Ausführungsform der Erfindung verleiht dem Überzug eine besonders große Stabilität, weil die beiden Grundgewebe im Nahtbereich überlappend miteinander verbunden sind. Dennoch wird durch die Einkürzung der Florfäden die Wandicke im Nahtbereich nur wenig verändert, so dass sich die angestrebte, nahezu stetige zylindrische Außenkontur ergibt.

Zweckmäßig sind beim zuletzt genannten Ausführungsbeispiel im Überlappungsbereich die Florfäden der jeweils unten liegenden Kante bis auf die Höhe des Grundgewebes eingekürzt. Hierdurch liegen im Überlappungsbereich die beiden Grundgewebe unmittelbar aufeinander auf und sind deshalb besonders innig miteinander zu verbinden. Durch diese Maßnahme wird auch vermieden, dass die Florfäden im Kantenbereich den Halt verlieren und herausgezupft werden. Alle Florfäden im Kantenbereich haben nämlich in diesem Fall einen ausreichenden Abstand zur äußersten Kante und verlieren deshalb nicht den Halt.

Zweckmäßig werden die Nähte mit Nadel und Faden genäht. Solche mit Nadel und Faden genähten Nähte sind besonders stabil und versteifen den Überzug am wenigsten. Durch geeignete Maßnahmen ist es möglich, an der Oberseite des Flors während des Nähvorganges die Florfäden zur Seite zu legen, so dass die Schlinge des Nähfadens unmittelbar an der Oberseite des Grundgewebes anliegt und alle Florfäden ausreichend freilässt, so dass sich auch im Bereich der Naht ein von Außen ungestörtes Florbild ergibt.

Alternativ können die Nähte auch geklebt oder geschweißt werden. Voraussetzung hierfür ist ein geeigneter Kleber oder geeignete Materialien für das Grundgewebe, die schweißbar sind.

Ausführungsbeispiele der Erfindung werden im folgenden Anhand der Zeichnung näher erläutert. Es zeigen:
- Fig. 1:: Einen ersten Überzug gemäß der Erfindung mit untergenähtem Textilband in geschnittener Seitenansicht;
- Fig. 2:: Eine zweite Ausführungsform des Überzuges gemäß der Erfindung in geschnittener Seitenansicht;

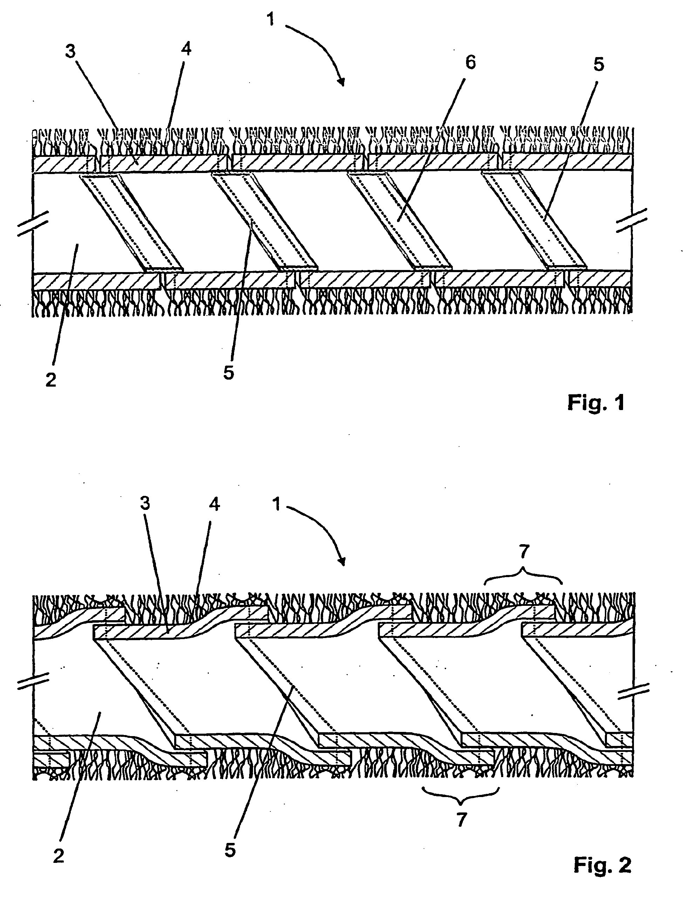

In den Figuren 1 und 2 ist der erfindungsgemäße Überzug als Ganzes jeweils mit der Bezugsziffer 1 bezeichnet. Der Überzug 1 besteht aus einem endlosen, helikal gewickelten Plüschband 2, wobei sich dieses aus einem Grundgewebe 3 und radial nach außen stehenden Florfäden 4 zusammensetzt. Die Kanten des Plüschbandes 2 werden durch endlose, helikal verlaufende Nähte 5 miteinander verbunden. In den Figuren ist deutlich zu erkennen, daß die dargestellten Überzüge eine nahezu stetige zylindrische Außenkontur aufweisen.

Bei dem in der Figur 1 dargestellten Ausführungsbeispiel des Überzuges 1 stoßen die Kanten des Plüschbandes 2 im Bereich der helikal verlaufenden Nähte 5 stumpf aneinander, wobei die Kanten des Plüschbandes 2 durch ein von Innen am Grundgewebe 3 befestigtes, flaches Textilband 6 zusammengehalten werden. Das Textilband 6 kann so dünn gewählt werden, daß die zylindrische Innenkontur des Überzuges 1 kaum gestört ist.

Bei dem in der Figur 2 dargestellten Ausführungsbeispiel überlappen sich die Kanten des Plüschbandes 2 im Bereich der helikalen Naht 5, wobei im Überlappungsbereich 7 der Flor 4 an den Kanten des Plüschbandes 2 soweit eingekürzt ist, daß sich eine weitgehend stetig verlaufende Außenkontur des Überzuges 1 ergibt. Insbesondere ist im Überlappungsbereich 7 der Flor 4 der jeweils unten liegenden Kante bis auf die Höhe des Grundgewebes 3 eingekürzt, so daß die Grundgewebe der überlappenden Kanten des Plüschbandes 2 durch die Naht 5 unmittelbar miteinander verbunden werden.

## Patentansprüche

1. Auswechselbarer, zylindermantelförmiger Überzug (1) aus Webplüsch mit radial nach außen vorstehenden Florfäden (4), für rotierende Waschbürsten oder Filterkerzen, bestehend aus einem endlosen, helikal gewickelten Plüschband (2) dessen Kanten durch eine endlose, helikal verlaufende Naht ohne Ausbildung einer die zylindrische Außenkontur des Überzuges (1) störenden Stufe miteinander verbunden sind, wobei die Kanten des Plüschbandes (2) im Bereich der helikal verlaufenden Naht (5) stumpf aneinanderstoßen,
**dadurch gekennzeichnet, dass** die Kanten des Plüschbandes (2) durch ein von innen am Grundgewebe (3) befestigtes, flaches und dünnes Textilband (6) zusammengehalten werden.

2. Auswechselbarer, zylindermantelförmiger Überzug (1) aus Webplüsch mit radial nach außen vorstehenden Florfäden (4), insbesondere für rotierende Waschbürsten oder Filterkerzen, bestehend aus einem endlosen, helikal gewickelten Plüschband (2), dessen Kanten durch eine endlose, helikal verlaufende Naht (5) ohne Ausbildung einer die zylindrische Außenkontur des Überzuges (1) störenden Stufe miteinander verbunden sind, **dadurch gekennzeichnet, dass** die Kanten des Plüschbandes (2) sich im Bereich der helikalen Naht (5) überlappen, wobei nur im Überlappungsbereich (7) die Florfäden (4) an den Kanten des Plüschbandes (2) soweit eingekürzt sind, dass sich eine stetig verlaufende, zylindrische Außenkontur des Überzuges (1) ergibt.

3. Überzug (1) nach Anspruch 2, **dadurch gekennzeichnet, dass** im Überlappungsbereich (7) die Florfäden der jeweils unten liegenden Kante bis zur Höhe des Grundgewebes (3) eingekürzt sind.

4. Überzug (1) nach Anspruch 2 oder 3, **dadurch gekennzeichnet, dass** die Nähte (5) mit Nadel und Faden genäht sind.

5. Überzug (1) nach den Ansprüchen 1 oder 2, **dadurch gekennzeichnet, dass** die Nähte (5) geklebt sind.

6. Überzug (1) nach Anspruch 1 oder 2, **dadurch gekennzeichnet, dass** die Nähte (5) geschweißt sind.

## Claims

1. A replaceable cover (1) of woven plush in the shape of a cylindrical sleeve having radially outwardly projecting pile threads (4) for rotating washing brushes or filter cartridges, comprising an endless, helically wound plush strip (2) whose edges are connected together by an endless helically extending seam without the formation of a step which disrupts the cylindrical external contour of the cover (1), wherein the edges of the plush strip (2) bear against each other in butting relationship in the region of the helically extending seam (5),
**characterised in that** the edges of the plush strip (2) are held together by a thin flat textile strip (6) fixed from the inside to the basic woven material (3).

2. A replaceable cover (1) of woven plush in the shape of a cylindrical sleeve having radially outwardly projecting pile threads (4) for rotating washing brushes or filter cartridges, comprising an endless, helically wound plush strip (2) whose edges are connected together by an endless helically extending seam (5) without the formation of a step which disrupts the cylindrical external contour of the cover (1),
**characterised in that** the edges of the plush strip (2) overlap in the region of the helical seam (5), wherein the pile threads (4) are shortened at the edges of the plush strip (2) only in the overlap region (7) to such an extent as to afford a constantly extending cylindrical external contour of the cover (1).

3. A cover (1) according to claim 2 **characterised in that** in the overlap region (7) the pile threads of the edge respectively disposed therebeneath are shortened to the height of the basic woven material (3).

4. A cover (1) according to claim 2 or claim 3 **characterised in that** the seams (5) are sewn with needle and thread.

5. A cover (1) according to claim 1 or claim 2 **characterised in that** the seams (5) are glued.

6. A cover (1) according to claim 1 or claim 2 **characterised in that** the seams (5) are welded.

## Revendications

1. Revêtement échangeable, en forme d'enveloppe cylindrique (1) en peluche tissée avec des fils de poils faisant radialement saillie vers l'extérieur, pour des brosses de lavage tournantes ou filtres en forme de bougie, consistant en une bande de peluche sans fin (2), enroulée hélicoïdalement, dont les arêtes sont reliées par une couture sans fin, s'étendant hélicoïdalement, sans formation d'un gradin gênant pour le contour extérieur cylindrique du revêtement (1), où les arêtes de la bande en peluche (2) dans la zone de la couture (5) s'étendant hélicoïdalement sont bout à bout, **caractérisé en ce que** les arêtes de la bande en peluche (2) sont retenues ensemble par une bande textile plate et mince (6) fixée depuis l'intérieur au tissu de base (3).

2. Revêtement échangeable, en forme d'enveloppe de cylindre (1) en peluche tissée avec des fils de poils (4) faisant saillie radialement vers l'extérieur, en particulier pour des brosses de lavage tournantes ou filtres en forme de bougie, consistant en une bande en peluche sans fin (2), enroulée hélicoïdalement, dont les arêtes sont reliées par une couture sans fin (5) s'étendant hélicoïdalement sans formation d'un gradin gênant pour le contour extérieur cylindrique du revêtement (1), **caractérisé en ce que** les arêtes de la bande en peluche (2) se chevauchent dans la zone de la couture hélicoïdale (5), où seulement dans la zone de recouvrement (7), les fils de poils (4) sont raccourcis aux arêtes de la bande en peluche (2) suffisamment pour obtenir un contour extérieur cylindrique, s'étendant continuellement, du revêtement (1).

3. Revêtement (1) selon la revendication 2, **caractérisé en ce que** dans la zone de recouvrement (7), les fils de poils de l'arête située respectivement en bas sont raccourcis jusqu'à la hauteur du tissu de base (3).

4. Revêtement (1) selon la revendication 2 ou 3, **caractérisé en ce que** les coutures (5) sont cousues avec une aiguille et du fil.

5. Revêtement (1) selon les revendications 1 ou 2, **caractérisé en ce que** les coutures (5) sont collées.

6. Revêtement (1) selon la revendication 1 ou 2, **caractérisé en ce que** les coutures (5) sont soudées.
